# EUROPÄISCHE PATENTSCHRIFT

(11) **EP 0 798 843 B1**
(45) Veröffentlichungstag und Bekanntmachung des Hinweises auf die Patenterteilung: **08.10.1997**
(21) Anmeldenummer: 96105003.6
(22) Anmeldetag: 28.03.1996
(51) Int. Cl.: H02K 7/08, F16H 57/02, F16C 19/12, F16C 25/02

(54) **Anordnung zur Einstellung des Axialspiels zwischen einer Welle und einem in einer Wellenaufnahme fixierbaren Anlaufteil**
Device for setting the axial play between a shaft and an axial bearing mounted in the shaft support structure
Dispositif de réglage du jeu axial entre un arbre et un palier axial monté dans la structure de support de l'arbre

(43) Veröffentlichungstag der Anmeldung: 01.10.1997
(73) Patentinhaber: SIEMENS AKTIENGESELLSCHAFT, 80333 München (DE)
(72) Erfinder: Fiedler, Rudolf, 97980 Bad Mergentheim (DE); Hamann, Holger, 97286 Sommerhausen (DE)

(56) Entgegenhaltungen:
- EP-A- 0 563 410
- DE-A- 3 344 249
- DE-A- 4 123 785
- FR-A- 2 347 812

## Beschreibung

Die Erfindung bezieht sich auf eine Anordnung zur Einstellung des Axialspiels zwischen einer Welle und einem in einer Wellenaufnahme fixierbaren Anlaufteil gemäß Anspruch 1; als Welle ist insbesondere eine Motor-Getriebe-Welle und als Wellenaufnahme ist insbesondere ein Getriebegehäuse eines Kraftfahrzeug-Verstellantriebes z.B. zur Fenster- bzw. Schiebeverstellung vorgesehen.

Durch die DE 41 23 785 A1 ist ein Elektromotor, insbesondere Kleinmotor zum Antrieb wenigstens eines Wischerarms einer Scheibenwischanlage eines Kraftfahrzeugs, mit einer drehbar gelagerten Ankerwelle bekannt, wobei eines der Wellenenden mittels eines federbelasteten Spanngliedes axial beaufschlagt und die Feder als Schenkelfeder ausgebildet ist und wobei außerdem der eine Federschenkel an einem Gehäuse gehalten ist, während der andere Federschenkel mit dem zumindest drehbar in diesem Gehäuse gelagerten Spannglied verbunden ist; das Spannglied ist als Exzenter ausgebildet, dessen Drehachse quer zur Längsachse der Ankerwelle verläuft und dessen Exzenter-Mantelfäche am zugeordneten Wellenende anliegt.

Durch die DE-C2-33 44 249 ist eine weitere Anordnung zur Einstellung des Axialspiels bekannt, bei der eine Anlaufscheibe mit axial vorstehender unterschiedlicher Stufung um eine parallel zur Welle verlaufende Drehachse entsprechend dem jeweiligen individuellen Unterschied zwischen Ist-Axialspiel und Soll-Axialspiel gedreht und in der Einstell-Endstellung mittels einer axialen Feder dauernd gegen die Welle angedrückt wird.

Der Erfindung liegt die Aufgabe zugrunde, eine Anordnung zu schaffen, die in fertigungs- und montagetechnisch aufwandsarmer Weise einen verschleiß- und geräuscharmen Betrieb gewährleistet. Die Lösung dieser Aufgabe gelingt durch eine Anordnung gemäß Anspruch 1; vorteilhafte Ausgestaltungen der Erfindung sind jeweils Gegenstand der Unteransprüche.

Die erfindungsgemäße Anordnung erlaubt mit einem Universal-Anlaufteil und einfachem Verstellungsvorgang die genaue Einstellung des Axialspiels auch bei größeren Toleranzbreiten ohne die verschleiß- und geräuschfördernde dauernde Druckanlage des Anlaufteils gegen die Welle. Die Einstellung des Axialspiels ohne jegliche zusätzliche Meß- bzw. Justiermittel wird dadurch noch weiter verbessert, daß die Umfangs-Anlauffläche aus über den Umfang aneinandergereihten Einzel-Anlaufflächen zusammengesetzt ist, wobei in vorteilhafter Weise die Einzel-Anlaufflächen jeweils tangential zu einer als exzentrische Ausbildung der Umfangsfläche vorgesehenen archimedischen Spirale verlaufen und jeweils einen zu der Welle senkrechten, um das einzustellende Axialspiel gegenüber der in Drehrichtung ablaufenden Außenkante zurückgesetzten Anlaufbereich aufweisen.

Die Erfindung sowie weitere vorteilhafte Ausgestaltungen der Erfindung gemäß Merkmalen der Unteransprüche werden im folgenden anhand schematisch dargestellter Ausführungsbeispiele in der Zeichnung näher erläutert; darin zeigen:
- FIG 1: in einem axialen Teilschnittbild eines Getriebegehäuses die axiale Draufsicht auf ein in einer Öffnung des Getriebegehäuses drehbar gelagertes Anlaufteil;
- FIG 2,3: das Anlaufteil in FIG 1 in axialer Seitenansicht bzw. stirnseitiger Unteransicht;
- FIG 4,5: die das Anlaufteil aufnehmende topfartige Öffnung in Innenboden-Draufsicht bzw. axialem Schnittbild;
- FIG 6: das in die topfartige Öffnung in einer ersten axialen Einstell-Einsteckstellung eintauchende Anlaufteil;
- FIG 7: das in die topfförmige Öffnung in einer zweiten Ausricht- bzw. Fixier-Einsteckstellung eintauchende Anlaufteil;
- FIG 8: eine Teilschnitt-Seitenansicht eines Motor-Getriebe-Verstellantriebes mit einer bekannten Axialspieleinstellung durch Einlegen von Anlaufscheiben unterschiedlicher Dicke.

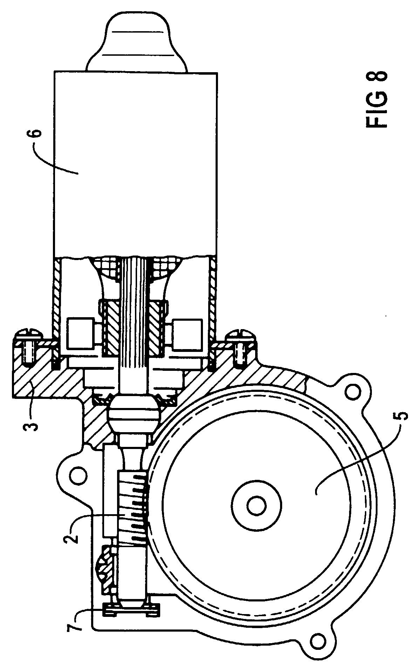

FIG 8 zeigt einen aus der EP-B2-0 133 527 bekannten Motor-Getriebe-Verstellantrieb für einen Kraftfahrzeug-Fensterheber enthaltend u.a. ein Getriebegehäuse 3 als Wellenaufnahme für eine Motor-Getriebe-Welle 2 und einen an das Getriebegehäuse angeflanschtem Elektromotor 6. Die in das Getriebegehäuse 3 verlängerte Motorwelle treibt als Schneckenwelle ein Getrieberad 5 an. Aufgrund von Fertigungstoleranzen sowohl der Lageraufnahme 3 als auch des Elektromotors 6 und insbesondere aufgrund der gegenseitigen Verschraubung der letztgenannten Bauteile ergibt sich nach dem Zusammenbau von Verstellantrieb zu Verstellantrieb einer Baureihe u.U. jeweils ein unterschiedliches Axialspiel zwischen der Welle 2 und ihrer Wellenaufnahme 3. Da dieses Axialspiel, z.B. aus Geräuschgründen, einen Maximalwert nicht überschreiten darf, ist dann jeweils für einen jeden solchen Verstellantrieb aufgrund eines vorherigen Vergleichs des jeweiligen Ist-Axialspiels mit dem zulässigen Soll-Axialspiels eine Axialspieleinstellung notwendig. Dazu werden im vorgenannten bekannten Fall Anlaufscheiben 7 senkrecht zur Achse der Welle 2 in eine Tasche der Wellenaufnahme 3 eingesteckt, wobei entsprechend dem jeweils zuvor gemessenen Unterschied zwischen Ist-Axialspiel und Soll-Axialspiel die Dicke der jeweils einzusteckenden Anlaufscheibe 7 angepaßt auszuwählen oder in eine Universal-Anlaufscheibe eine entsprechend axial unterschiedlich lange Anlaufwarze zu formen ist.

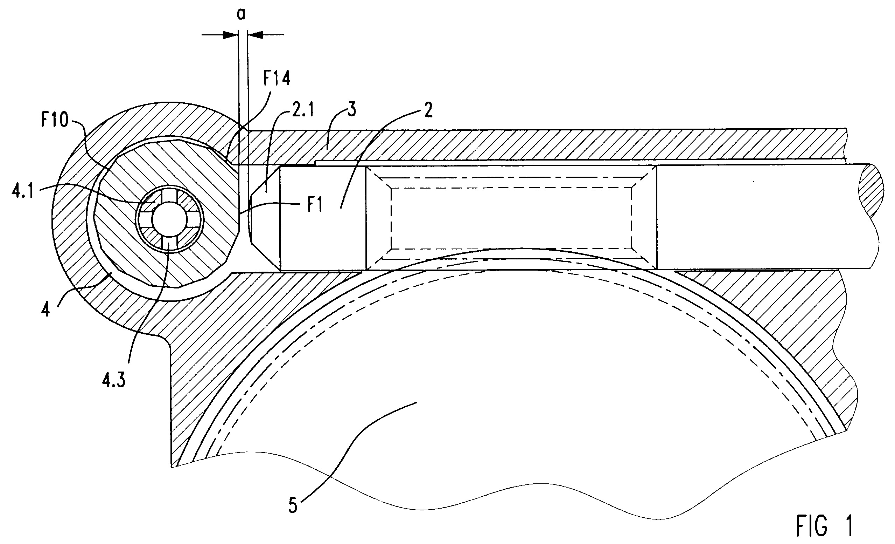

Die demgegenüber hinsichtlich Fertigungs- und Montageaufwand wesentlich günstigere und gleichzeitig in vorlteilhafter Weise zu der Welle abstützungsfrei in der Wellenaufnahme fixierbare Anordnung zur Einstellung des Axialspiels gemäß vorliegender Erfindung wird im folgenden anhand der Figuren 1 bis 7 näher erläutert:

Das Anlaufteil 1 ist in eine topfförmige Öffnung 4 des als Wellenaufnahme 3 für die Welle 2 vorgesehenen Getriebegehäuses einsteckbar.

Ein Axialspiel ist jeweils einzustellen zwischen der Welle 2, die endseitig mit einer Anlaufkuppe 2.1 versehen ist, und der gegenüberliegenden, senkrecht zur Achse der Welle 2 angeordneten Umfangsfläche des Anlaufteils 1. Die Umfangsfläche des Anlaufteils 1 ist nach einer vorteilhaften Ausgestaltung der Erfindung aus über den Umfang verteilten aneinandergereihten Einzel-Anlauf flächen, in vorliegendem Beispiel insgesamt 14 Einzel-Anlauf flächen F1-F14, zusammengesetzt. Die Einzel-Anlaufflächen F1-F14 verlaufen jeweils tangential zu einer den exzentrischen Verlauf der Umfangsfläche der Anlaufteils 1 bestimmenden archimedischen Spirale (Klothoide).

FIG 1 zeigt das Anlaufteil 1 in der Stellung, in welcher der größte Abstand a zwischen der Anlaufkuppe 2.1 der Welle 2 und der senkrecht zur Achse der Welle 2 gegenüberliegenden Umfangsfläche, im vorliegenden Fall der Einzel-Anlauf fläche F1, gegeben ist. Die Einzel-Anlauf flächen F1-F14 weisen erfindungsgemäß jeweils im Zwischen-Bereich zwischen ihrer endseitigen Anlaufkante einerseits bzw. Ablaufkante andererseits ihren geringsten radialen Abstand zu der Drehachse 4.1 des Anlaufteils 1 bei senkrechter Stellung zur Achse der Welle 2 auf, wobei je Einzel-Anlauf fläche der Unterschied zwischen dem Abstand ihrer Ablaufkante zur Welle 2 einerseits und dem Abstand zur Welle 2 bei ihrer Stellung senkrecht zur Achse der Welle 2 andererseits dem jeweils maximal einzustellenden Axialspiel entspricht.

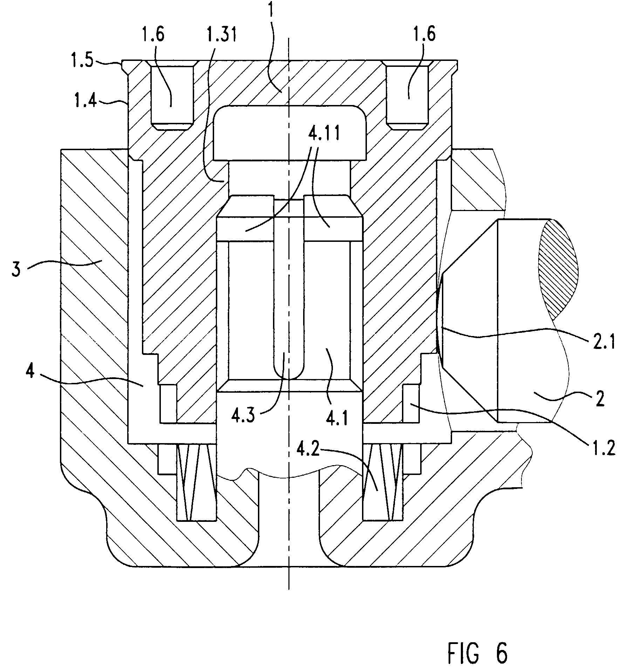

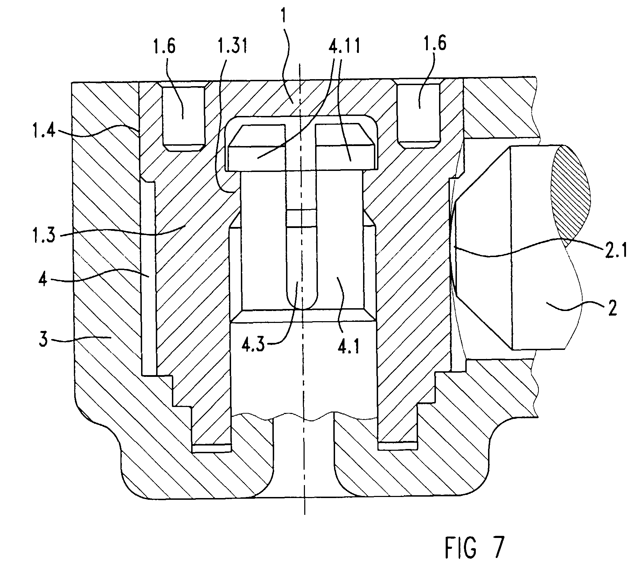

Beim Drehen des Anlaufteils 1 aus der in FIG 1 dargestellten Stellung entgegen dem Uhrzeigersinn verringert sich das Axialspiel zunehmend aufgrund der exzentrischen Erweiterung der Umfangsfläche solange bis eine Drehhemmung dadurch eintritt, daß das Axialspiel zwischen der Anlaufkuppe 2.1 der Welle 2 einerseits und der gerade gegenüber der Anlaufkuppe 2.1 befindlichen Einzel-Anlauf fläche zu Null geworden ist. Durch Rückdrehen des Anlaufteils 1 im Uhrzeigersinn bis zu der Stellung, in der die letztgenannte Einzel-Anlauffläche senkrecht zur Achse der Welle 2 und dabei im geringsten radialen Abstand zu der Drehachse 4.1 angeordnet ist, wird dann das gewünschte zulässige Axialspiel gewährleistet. In dieser Stellung ist dann das Anlaufteil - wie insbesondere anhand der Figuren 6;7 im folgenden näher erläutert - fixierbar.

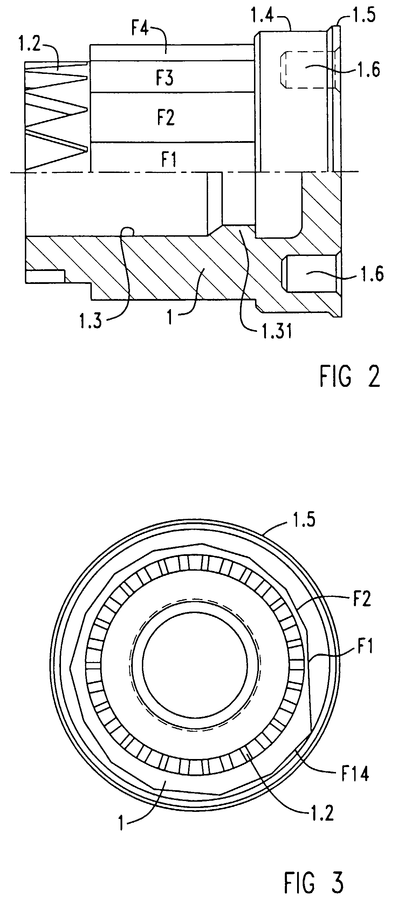

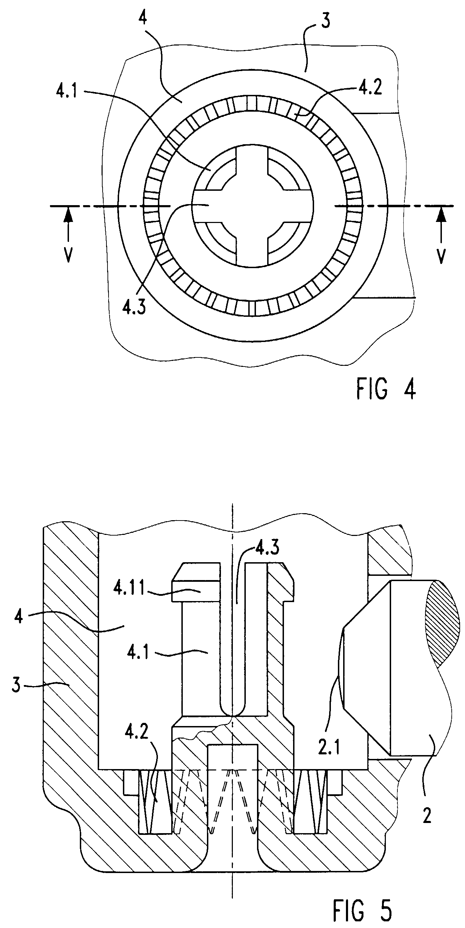

Dazu zeigen zunächst FIG 2 in axialer Seitenansicht bzw. axialem Schnitt und FIG 3 in stirnseitiger Unteransicht ein Universal-Anlaufteil 1, das in die topfförmige Öffnung 4 gemäß FIG 4,5 des als Wellenaufnahme 3 vorgesehenen Getriebegehäuses einsteckbar ist. Zum fertigungs- und insbesondere montagetechnisch vorteilhaften Zusammenbau des Anlaufteils 1 in der topfförmigen Öffnung 4 weist das Anlaufteil 1 eine Drehhülse 1.3 auf, die auf einen als Drehachse 4.1 vorgesehenen Drehzapfen der topfförmigen Öffnung 4 axial und senkrecht zur Achse der Welle 2 aufsteckbar ist; zur drehbaren Verstellung des Anlaufteils 1 ist dann das Anlaufteil 1 gemäß FIG 6 zunächst in eine erste axiale Einstell-Einsteckstellung bringbar, bei der das Anlaufteil 1 einerseits an einem Drehzapfen-Nasenring 4.11 der Drehachse 4.1 und andererseits mit einer Führungsfläche 1.4 an dem Innenrand der topfförmigen Öffnung 4 führbar ist. Der Drehzapfen-Nasenring 4.11 ist dabei vorteilhaft als Aufsteckhilfe entgegen der Aufsteckrichtung der Drehhülse 1.3 konisch verjüngt bzw. mittels axialer Federschlitze 4.3 elastisch nachgebend ausgebildet. Zur einfachen Dreheinstellung des Anlaufteils 1 sind in dessen Außenstirnflächen Drehwerkzeugaufnahmen 1.6 eingeformt, die zur formschlüssigen Einsteckaufnahme eines zusätzlichen - hier nicht dargestellten - Dreh-Hilfswerkzeuges dienen.

Wie zuvor beschrieben, wird zur Einstellung des Axialsiels das Anlaufteil 1 jeweils soweit im Gegenuhrzeigersinn gedreht, bis das Spiel zwischen der letzten Einzel-Anlauffläche und der Anlaufkuppe 2.1 der Welle 2 zu Null geworden ist. Zur Gewährleistung des gewünschten Axialspiels ist anschließend das Anlaufteil 1 soweit zurückzustellen, bis die durch die Drehhemmung begrenzte Einzel-Anlauf fläche senkrecht zur Achse der Welle 2 steht; um diese Rückdrehung auf einfache Weise selbsteinstellend gewährleisten zu können, sind nach einer Ausgestaltung der Erfindung das Anlaufteil 1 und die topfförmige Öffnung 4 in der Wellenaufnahme 3 im Sinne einer gegenseitigen Ausrichtfixierung der Einzel-Anlauf flächen senkrecht zur Achse der Welle 2 mit gegenseitigen einander korrespondierenden Führungsnasen 1.2 bzw.4.2 mit axial gegeneinandergleitenden entsprechenden Führungsflächen versehen. Im vorliegenden Fall sind die Führungsnasen 1.2 bzw.4.2 des Anlaufteils 1 bzw. der topfförmigen Öffnung 4 als Zähne mit konisch verlaufenden Flanken derart ausgebildet und am Umfang angeordnet, daß das Anlaufteil 1 bei einer weiteren axialen Bewegung von der ersten axialen Einstell-Einsteckstellung gemäß FIG 6 in die zweite axiale Ausricht- bzw. Fixier-Einsteckstellung gemäß FIG 7 derart ausgerichtet ist, daß die jeweils der Welle 2 gegenüberliegende Einzel-Anlauffläche senkrecht zu der Achse der Welle 2 gestellt und das gewünschte Axialspiel gewährleistet ist. Bei Erreichen der zweiten axialen Ausricht- bzw. Fixier-Einsteckstellung wird das Anlaufteil 1 in axialer Gegenrichtung formschlüssig durch eine vorteilhafte selbsttätige Schnapp-Arretierung gesichert. Dazu ist nach Art einer Hinterschneidung das Anlaufteil 1 mit einem Drehhülsen-Schnappring 1.31 versehen, der hinter einen korrespondierenden Drehzapfen-Nasenring 4.11 des als Drehachse 4.1 vorgesehenen Drehzapfens einschnappt.

In vorteilhafter Weise sind sowohl das Anlaufteil 1 als auch die Wellenaufnahme 2 und die topfförmige Öffnung 4 jeweils einschließlich ihrer Führungs- bzw. Arretierungsmittel einstückig, insbesondere als Kunststoff-Spritzgußteil, gefertigt.

Zur einfachen feuchtigkeitsdichten Montage des Anlaufteils 1 in der Wellenaufnahme 3 ist das Anlaufteil 1 an seinem den Führungsnasen 1.2 abgewandten Ende in vorteilhafter Weise als geschlossener Deckel ausgebildet, der mit seiner Führungsfläche 1.4 bzw. mit einem diese nach außen übergreifenden Außenrand 1.5 gegenüber der Wandung der topfförmigen Öffnung 4, z.B. durch Verkleben, Verschrauben oder insbesondere durch Verschweißen, abdichtbar ist.

Es dürfte ersichtlich sein, daß bei der erfindungsgemäßen Anordnung zur Einstellung des Axialspiels trotz großer Toleranzbreite einer Bauserie das Axialspiel mit nur einem Universal-Anlaufteil ohne ein kompliziertes Montage bzw. Einstellverfahren für eine Festlegung des notwendigen Restspiels und ohne ständigen axialen Andruck des Anlaufteils gegen die Welle dadurch möglich ist, daß das Anlaufteil senkrecht zur Achse der Welle in der Wellenaufnahme drehbar gelagert und mit einer zu seiner Drehachse exzentrischen Umfangs-Anlauffläche ausgestattet ist, wobei diese Umfangsanlauffläche in vorteilhafter Weise aus Einzel-Anlauf flächen zusammengesetzt ist, die vorzugsweise tangential zu einer archimedischen Spirale verlaufen bzw. jeweils einen zu der Welle senkrechten, um das einzustellende Axialspiel gegenüber der in Drehrichtung ablaufenden Außenkante zurückgesetzten Anlaufbereich aufweisen.

## Patentansprüche

1. Anordnung zur Einstellung des Axialspiels zwischen einer Welle (2), insbesondere einer Motor-Getriebe-Welle, und einem in einer Wellenaufnahme (3), insbesondere einem Getriebegehäuse eines Kraftfahrzeug-Verstellantriebes, fixierbaren Anlaufteil (1) mit den Merkmalen:
a) Das Anlaufteil (1) ist in der Wellenaufnahme (3) um eine Drehachse (4.1) im wesentlichen senkrecht zur Achse der Welle (2) drehbar gelagert und zu dieser abstützungsfrei in seiner Einstellendlage fixierbar;
b) das Anlaufteil (1) ist mit einer exzentrisch zu der Drehachse (4.1) verlaufenden Umfangs-Anlauffläche versehen;
c) der Unterschied zwischen dem minimalen bzw. dem maximalen Abstand der Umfangs-Anlauffläche einerseits und der Welle (2) andererseits umfaßt den gesamten toleranzbedingten Einstellbereich.

2. Anordnung nach dem vorhergehenden Anspruch mit dem Merkmal:
d) Die Umfangs-Anlauffläche besteht aus aneinandergereihten Einzel-Anlaufflächen (F1-F14).

3. Anordnung nach zumindest einem der vorhergehenden Ansprüche mit dem Merkmal:
e) Die Umfangs-Anlauffläche folgt einer archimedischen Spirale und ist aus jeweils zu der archimedischen Spirale tangential verlaufenden aneinandergereihten Einzel-Anlaufflächen (F1-F14) zusammengesetzt.

4. Anordnung nach zumindest einem der vorhergehenden Ansprüche 2 bzw. 3 mit dem Merkmal:
f) Die Einzel-Anlaufflächen (F1-F14) weisen jeweils im Zwischen-Bereich zwischen ihren endseitigen Anlaufkanten bzw. Ablaufkanten ihren geringsten radialen Abstand zu der Drehachse (4.1) des Anlaufteils (1) auf.

5. Anordnung nach Anspruch 4 mit dem Merkmal:
g) Der Unterschied zwischen dem Abstand der Ablaufkante zu der Welle 2 einerseits und einer Einzel-Anlauf fläche (F1-F14) zu der Welle 2 bei Stellung senkrecht zu der Welle 2 und gleichzeitig geringstem radialen Abstand zur Drehachse (4.1) andererseits entspricht dem jeweils maximal einzustellenden Axialspiel.

6. Anordnung nach zumindest einem der vorhergehenden Ansprüche 2-5 mit dem Merkmal:
h) Das Anlaufteil (1) ist mit jeweils im Anlaufpunkt senkrecht zur Achse der Welle (2) verlaufender Einzel-Anlauf fläche (F1-F14) in der Wellenaufnahme (3) fixierbar, insbesondere verrastbar.

7. Anordnung nach Anspruch 6 mit dem Merkmal:
i) Das Anlaufteil (1) ist im Sinne einer definierten Axialspieleinstellung um die Drehachse (4.1) bis zu einer Drehhemmung in Umfangsrichtung drehbar und in seiner anschließenden Einstellendlage durch axiales Verschieben in der Lageraufnahme (3) drehfest fixierbar, insbesondere verrastbar.

8. Anordnung nach zumindest einem der Ansprüche 7 mit dem Merkmal:
j) Das Anlaufteil (1) und die Wellenaufnahme (3) weisen im Sinne einer gegenseitigen Ausrichtfixierung der Einzel-Anlaufflächen (F1-F14) in ihrer Einstellendlage senkrecht zur Achse der Welle (2) Führungsnasen (1.2 bzw. 4.2) mit axial gegeneinander gleitenden entsprechenden Führungsflächen auf.

9. Anordnung nach zumindest einem der vorhergehenden Ansprüche mit dem Merkmal:
k) Die Drehachse (4.1) besteht aus einem in der Wellenaufnahme (3) gehalterten Drehzapfen bzw. Drehhülse, auf den bzw. auf welche das Anlaufteil (1) mit einer korrespondierenden Drehhülse bzw. Drehzapfen in einer ersten axialen Aufsteckstellung drehbar und in einer zweiten weiteren axialen Aufsteckstellung drehfest fixierbar ist.

10. Anordnung nach zumindest einem der vorhergehenden Ansprüche mit dem Merkmal:
1) Das Anlaufteil (1) ist in einer topfartigen Öffnung (4) der Lageraufnahme (3) tangential zu der Drehachse (4.1) drehbar bzw. axial zu der Drehachse (4.1) im Sinne einer formschlüssigen Fixierung seiner Einstellendlage eindrückbar.

11. Anordnung nach Anspruch 10 mit dem Merkmal:
m) Das Anlaufteil (1) ist nach axial außen deckelartig ausgebildet und gegenüber der topfartigen Öffnung (4) dicht verschließbar.

12. Anordnung nach Anspruch 11 mit dem Merkmal:
n) Das Anlaufteil (1) ist in seiner fixierten Einstell-Endlage im Sinne einer dichtschließenden Verbindung mit dem Randbereich der topfartigen Öffnung verschweißbar.

## Claims

1. Arrangement for setting the axial play between a shaft (2), in particular a motor-gear shaft, and a buffer component (1) which can be fixed in a shaft holder (3), in particular a gear case of a motor-vehicle adjusting drive, having the following features:
a) The buffer component (1) is mounted in the shaft holder (3) in such a way as to be rotatable about a pivot (4.1) essentially at right angles to the axis of the shaft (2) and can be fixed without support relative to the latter in its final set position;
b) the buffer component (1) is provided with a circumferential buffer surface which extends eccentrically relative to the pivot (4.1);
c) the difference between the minimum and the maximum distance between the circumferential buffer surface, on the one hand, and the shaft (2) on the other hand, comprises the entire tolerance-related setting range.

2. Arrangement according to the preceding claim with the following feature:
d) The circumferential buffer surface comprises adjoining individual buffer surfaces (F1-F14).

3. Arrangement according to at least one of the preceding claims with the following feature:
e) The circumferential buffer surface follows an archimedean spiral and is made up of adjoining individual buffer surfaces (F1-F14) each extending tangentially to the archimedean spiral.

4. Arrangement according to at least one of preceding Claims 2 and 3 with the following feature:
f) The individual buffer surfaces (F1-F14) are at their minimum radial distance from the pivot (4.1) of the buffer component (1) in the intermediate region between their end-located leading edges and trailing edges.

5. Arrangement according to Claim 4 with the following feature:
g) The difference between the distance of the trailing edge from the shaft 2, on the one hand, and of an individual buffer surface (F1-F14) from the shaft 2 in a position at right angles to the shaft 2 and with the radial distance from the pivot (4.1) simultaneously at the minimum, on the other hand, corresponds to the respective maximum axial play to be set.

6. Arrangement according to at least one of preceding Claims 2-5 with the following feature:
h) The buffer component (1) can be fixed, in particular latched, in the shaft holder (3) with the respective individual buffer surface (F1-F14) extending at right angles to the axis of the shaft (2) at the point of contact.

7. Arrangement according to Claim 6 with the following feature:
i) To give defined axial-play setting, the buffer component (1) can be rotated about the pivot (4.1) in the circumferential direction until inhibition of rotation occurs, and can be fixed against rotation, in particular latched, in its subsequent final set position by axial displacement in the bearing socket (3).

8. Arrangement according to at least one of Claims 1 to 7 with the following feature:
j) To produce mutual fixing of the individual buffer surfaces (F1-F14) in alignment in their final set position at right angles to the axis of the shaft (2), the buffer component (1) and the shaft holder (3) have guide noses (1.2 and 4.2 respectively) with corresponding guide surfaces which slide axially against one another.

9. Arrangement according to at least one of the preceding claims with the following feature:
k) The pivot (4.1) comprises a journal or rotary sleeve which is held in the shaft holder (3), on which, by means of a corresponding rotary sleeve or journal, the buffer component (1) can be rotated in a first axial mounting position and fixed against rotation in a second, further axial mounting position.

10. Arrangement according to at least one of the preceding claims with the following feature:
l) The buffer component (1) can be rotated tangentially to the pivot (4.1) or pushed in axially relative to the pivot (4.1) in a pot-like opening (4) in the bearing socket (3) so as to produce positive fixing of its final set position.

11. Arrangement according to Claim 10 with the following feature:
m) The buffer component (1) is of cover-like design axially towards the outside and can be closed leaktightly relative to the pot-like opening (4).

12. Arrangement according to Claim 11 with the following feature:
n) The buffer component (1) can be welded to the rim region of the pot-like opening in its fixed final set position to produce a leaktightly closing joint.

## Revendications

1. Dispositif de réglage du jeu axial entre un arbre (2), notamment d'un arbre moteur-transmission, et une pièce (1) d'arrêt pouvant être immobilisée dans un logement (3) d'arbre, notamment dans un carter de transmission d'un dispositif de réglage de véhicule automobile, comportant les caractéristiques :
a) la pièce (1) d'arrêt est montée tournante dans le logement (3) de l'arbre par rapport à un axe (4.1) de rotation sensiblement perpendiculaire à l'axe de l'arbre (2) et peut être immobilisée dans sa position d'extrémité de réglage sans appui par rapport à celui-ci;
b) la pièce (1) d'arrêt a une surface d'arrêt périphérique s'étendant de manière excentrée par rapport à l'axe (4.1) de rotation ;
c) la différence entre la distance minimale ou la distance maximale de la surface d'arrêt périphérique d'une part et l'arbre (2) d'autre part comprend l'ensemble de la plage de réglage due aux tolérances.

2. Dispositif suivant la revendication précédente, ayant la caractéristique :
d) la surface d'arrêt périphérique est constituée de surfaces d'arrêt individuelles (F1 à F14) l'une à la suite de l'autre.

3. Dispositif suivant au moins l'une des revendications précédentes, ayant la caractéristique :
e) la surface d'arrêt périphérique suit une spirale d'Archimède et est composée de surfaces d'arrêt (F1 à F14) individuelles l'une à la suite de l'autre s'étendant tangentiellement à la spirale d'Archimède.

4. Dispositif suivant au moins l'une des revendications précédentes 2 ou 3, ayant la caractéristique :
f) les surfaces d'arrêt individuelles (F1 à F14) ont leur plus petite distance radiale à l'axe de rotation (4.1) de la pièce (1) d'arrêt dans la zone intermédiaire comprise entre leurs arêtes d'extrémité en amont et leurs arêtes d'extrémité en aval.

5. Dispositif suivant la revendication 4, ayant la caractéristique :
g) la différence entre la distance de l'arête terminale à l'arbre (2) d'une part et celle d'une surface d'arrêt individuelle (F1 à F14) à l'arbre (2) lorsqu'elle est dans la position perpendiculaire à l'arbre (2) et lorsque en même temps la distance radiale à l'axe (4.1) de rotation est la plus petite, d'autre part, correspond au jeu axial maximum à régler.

6. Dispositif suivant au moins l'une des revendications précédentes 2 à 5, ayant la caractéristique :
h) la pièce (1) d'arrêt peut être immobilisée, notamment encliquetée, dans le logement (3) de l'arbre par une surface (F1 à F14) d'arrêt individuelle s'étendant au point d'arrêt perpendiculairement à l'axe de l'arbre (2)

7. Dispositif suivant la revendication 6, ayant la caractéristique :
i) la pièce (1) d'arrêt peut tourner par rapport à l'axe (4.1) de rotation jusqu'à un blocage en rotation dans la direction périphérique en vue du réglage d'un jeu axial défini et peut être immobilisée, notamment encliquetée, de manière fixe en rotation, dans sa position d'extrémité de réglage consécutive par coulissement axial dans le logement (3) de palier.

8. Dispositif suivant au moins l'une des revendications précédentes, ayant la caractéristique :
j) la pièce (1) d'arrêt et le logement (3) de l'arbre comportent, en vue d'une immobilisation réciproque en alignement des surfaces d'arrêt (F1 à F14) individuelles dans leur position d'extrémité de réglage perpendiculairement à l'axe de l'arbre (2), des becs de guidage (1.2 respectivement 4.2) ayant des surfaces de guidage correspondantes glissant l'une contre l'autre axialement.

9. Dispositif suivant au moins l'une des revendications précédentes, ayant la caractéristique :
k) l'axe (4.1) de rotation est constitué d'un tourillon respectivement d'une douille rotative maintenue dans le logement (3) de l'arbre, sur laquelle la pièce (1) d'arrêt peut tourner avec une douille rotative correspondante respectivement avec un tourillon correspondant dans une première position axiale d'enfichage et peut être immobilisé de manière fixe en rotation dans une deuxième position axiale d'enfichage supplémentaire.

10. Dispositif suivant au moins l'une des revendications précédentes, ayant la caractéristique :
I) la pièce (1) d'arrêt peut tourner dans une ouverture (4) en forme de pot du logement (3) de palier tangentiellement à l'axe (4.1) de rotation et peut être enfoncée axialement à l'axe (4.1) de rotation en vue d'une immobilisation par complémentarité de formes de sa position d'extrémité de réglage.

11. Dispositif suivant au moins la revendication 10, ayant la caractéristique :
m) la pièce (1) d'arrêt est en forme de couvercle vers l'extérieur suivant l'axe et peut être fermée de manière étanche par rapport à l'ouverture (4) en forme de pot.

12. Dispositif suivant au moins la revendication 11, ayant la caractéristique :
n) la pièce (1) d'arrêt peut être soudée dans sa position d'extrémité de réglage immobilisée, en vue d'une liaison fermant de manière étanche avec la zone du bord de l'ouverture en forme de pot.
